# EUROPEAN PATENT APPLICATION

(11) **EP 4 726 905 A1**
(43) Date of publication of application: **15.04.2026**
(21) Application number: 23940295.1
(22) Date of filing: 10.08.2023
(51) Int. Cl.: H01M 50/507, H01M 50/503, H01M 50/516, H01M 50/509, H01M 50/213

(54) **BUSBAR ASSEMBLY, BATTERY MODULE AND BATTERY PACK**

(30) Priority: 08.06.2023 CN 202310676069; 08.06.2023 CN 202321453692 U
(71) Applicant: Eve Energy Co., Ltd., Huizhou, Guangdong 516006 (CN)
(72) Inventor: LAN, Han, Guangdong 516006 (CN)
(74) Representative: Michalski Hüttermann & Partner Patentanwälte mbB
(86) International application number: PCT/CN2023/112107
(87) International publication number: WO 2024/250415

(57) **Abstract**

A bus bar assembly, a battery module, and a battery pack are provided in the present disclosure. The bus bar assembly includes a positive bus bar, a negative bus bar, a series-connected bus bar, and a connecting bus bar. All of parts of the connecting bus bar, the series-connected bus bar, and the negative bus bar respectively connected to negative terminals of corresponding cells are defined as negative electrode parts. At least one partition slot is defined on a negative electrode part, and the at least one partition slot is defined to separate the negative electrode part into at least two separated parts in a second direction. Each of the at least two separated parts is connected to a negative terminal of a corresponding cell.

## Description

### CROSS-REFERENCE TO RELATED APPLICATION(S)

This application claims priority to Chinese Patent Application No. 2023106760695, filed with the Chinese Patent Office on June 8, 2023, and Chinese Patent Application No. 2023214536926, filed with the Chinese Patent Office on June 8, 2023, and entitled "BUS BAR ASSEMBLY, BATTERY MODULE, AND BATTERY PACK", the entire disclosures of which are hereby incorporated by reference.

### TECHNICAL FIELD

The present disclosure relates to the field of battery technology, and particularly, to a bus bar assembly, a battery module, and a battery pack.

### BACKGROUND

A battery module is composed of multiple cells. The batteries are connected in series and/or in parallel in a certain way through a bus bar. In the related art, a bus bar assembly and a cylindrical power battery module are disclosed, where the bus bar assembly is used for a circuit connection of the cylindrical power battery module and includes an input copper bar, an output copper bar, and cells contact system (CCS) components with a quantity corresponding to the sub-modules. The input copper bar is connected to a cell unit at an input terminal of the cylindrical power battery module, the output copper bar is connected to a cell unit at an output terminal of the cylindrical power battery module, and the CCS components connect cell units of the sub-modules in series and in parallel, achieving high reliability of inter-cell unit connection and high utility rate of space.

However, when the battery module or battery pack is charging and discharging, the cell will expand to a certain extent in a direction towards the bus bar assembly, and such expansion will become more obvious especially after a long-term use of the battery module or battery pack. This expansion will cause a peel force imposed on a connection between the bus bar and a negative electrode of the cell. And during a random vibration test, the connection between the bus bar and the negative electrode of the cell will be subjected to a shear force while being subjected to a peel force, similar to the peel force caused by the aforementioned expansion. The aforementioned peel force and shear force both increase the risk of structural failure of the connection between the bus bar and the negative electrode of the cell, affecting the service lifespan and safety performance of the battery module or battery pack.

### Technical Problems

In view of the problems existing in the related art, a bus bar assembly is provided in the present disclosure. When the cell expands or vibrates, the bus bar is capable of absorbing the peel force and shear force imposed on a connection between a negative terminal of a cell and a negative electrode part, thereby can effectively reduce the risk of structural failure of the connection between the negative electrode part and the negative terminal of the cell.

### Technical Solutions

In a first aspect, a bus bar assembly, applied to cylindrical power battery modules, is provided in the present disclosure. Each cylindrical power battery module includes multiple cells, the bus bar assembly includes a positive bus bar, a negative bus bar, a series-connected bus bar, and a connecting bus bar. The connecting bus bar is disposed in a cylindrical power battery module, and the connecting bus bar is arranged to connect two adjacent cells in a first direction in series and to connect two adjacent cells in a second direction in parallel. The series-connected bus bar is arranged to connect two adjacent cylindrical power battery modules in series to form a battery group. The positive bus bar is connected to a positive terminal of a cell at a positive output terminal of the battery group. The negative bus bar is connected to a negative terminal of a cell at a negative output terminal of the battery group. All of parts of the connecting bus bar, the series-connected bus bar, and the negative bus bar respectively connected to negative terminals of corresponding cells are defined as negative electrode parts. At least one partition slot is defined on a negative electrode part. The at least one partition slot is defined to separate the negative electrode part into at least two separated parts in the second direction. Each of the at least two separated parts is connected to a negative terminal of a corresponding cell.

In a second aspect, a battery module including the aforementioned bus bar assembly is provided in the present disclosure. The battery module has high safety performance.

In a third aspect, a battery pack including the aforementioned battery module is provided in the present disclosure. The battery pack has high safety performance and long service lifespan.

### Beneficial Effects

Compared with a structure where a negative electrode part is welded as a whole to a negative terminal of a cell, each of at least two separated parts is connected to the negative terminal of the corresponding cell in the present disclosure, which can effectively reduce the welding stress. When the cell expands or vibrates, a separated part deforms to absorb a peel force and a shear force imposed on a connection between the negative terminal of the cell and the negative electrode part, which can effectively reduce a risk of structural failure of the connection between the negative electrode part and the negative terminal of the cell, and enhance service lifespan and safety performance of the cylindrical power battery module or the battery pack.

### BRIEF DESCRIPTION OF THE DRAWINGS

FIG. 1 is a perspective schematic structural view of a battery group provided in embodiments of the present disclosure.
FIG. 2 is a top schematic structural view of a battery group provided in embodiments of the present disclosure.
FIG. 3 is an exploded schematic structural view of a battery group provided in embodiments of the present disclosure.
FIG. 4 is a partial enlarged view of structure A in FIG. 3.
FIG. 5 is a partial enlarged view of structure B in FIG. 3.
FIG. 6 is a top schematic structural view of a connecting bus bar provided in embodiments of the present disclosure.

Reference signs: 10 - cylindrical power battery module; 100 - cell; 210 - positive bus bar; 220 - connecting bus bar; 221 - separate sheet; 221a - first positive electrode part; 221b - first negative electrode part; 222 - first separated part; 223 - overflow hole; 230 - series-connected bus bar; 230a - negative electrode module; 230b - positive electrode module; 231 - second negative electrode part; 2311 - second separated part; 232 - parallel-connected negative electrode main body; 233 - second groove; 240 - negative bus bar; 241 - third negative electrode part; 2411 - third separated part; 242 - bus bar main body; 250 - second thermal fuse; 260 - first thermal fuse; 270 - partition slot; 271 - first fillet; 272 - second fillet; 280 - convex arch; 290 - first extension part; and 291 - first groove.

### DETAILED DESCRIPTION

In description of the present disclosure, it may be noted that if an orientation or a position relationship indicated by the terms "above", "below", "front", "back", "left", "right", "vertical", "horizontal", "top", "bottom", "inside", "outside" and the like is an orientation or a position relationship illustrated according to the accompanying drawings, it is for the convenience of describing the present disclosure and simplifying the description, rather than indicating or implying that a device or an element referred to must have a specific orientation or be disposed and arranged in a specific orientation, and therefore should not be a limitation to the present disclosure.

In description of the present disclosure, unless otherwise clearly specified or limited, the terms "first" and "second" are used for description rather than indicating or implying a relative importance; the terms "multiple" and "a plurality of" are intended to mean "two or more"; and the term "and/or" includes any combination and all combinations of one or more related listed items. Specifically, the terms "the" or "one" used to refer to the object are intended to represent one of the possible multiple such objects.

Unless otherwise defined, all technical and scientific terms used in the present disclosure have the same meaning as commonly understood by those skilled in the art to which the present disclosure belongs; the terms used in the specification of the present disclosure are intended to describe specific embodiments rather than limiting the present disclosure; and the terms "include", "comprise", and "have" as well as variations thereof are intended to cover non-exclusive inclusion.

Furthermore, in description of the present disclosure, it may be understood that the mentioned orientation words, such as "above", "below", "inside", "outside", etc., are only described based on the perspective illustrated by the accompanying drawings, and should not be limited to specific embodiments. It may also be understood that, in the context, when an element or mean is referred to as being connected "above", "below", "inside", or "outside" another element (one or more), it includes both being directly connected "above", "below", "inside", or "outside" another element (one or more), and being indirectly connected "above", "below", "inside", or "outside" another element (one or more) via an intermediate element.

In an embodiment, an angle between an extending direction of each of the at least one partition slot and the first direction is within a range of ± 45°.

In an embodiment of the present disclosure, a fillet is defined at a top corner of each of the at least one partition slot.

In an embodiment, a width of each of the at least one partition slot is in a range of 0.5 mm to 5 mm.

In an embodiment, the width of each of the at least one partition slot is in a range of 1 mm to 3 mm.

In an embodiment, a connecting bus bar includes at least two separate sheets arranged in the second direction, and two adjacent separate sheets are connected by a first thermal fuse.

In an embodiment, a part of a separate sheet connected to a positive terminal of a corresponding cell is defined as a first positive electrode part, a part of a separate sheet connected to a negative terminal of the corresponding cell is defined as a first negative electrode part, and a terminal of the first thermal fuse is connected to the first positive electrode part.

In an embodiment, each of two adjacent separate sheets arranged in the second direction is provided with a first extension part at their sides facing towards each other, and the first extension part is disposed at the first positive electrode part; and the first extension part defines a first groove, and the first groove is arranged to accommodate the first thermal fuse.

In an embodiment, the first negative electrode part is provided with a convex arch, and the convex arch protrudes in a direction away from the cell; and the at least one partition slot defined on the connecting bus bar extends to the convex arch.

In an embodiment, a top surface of the convex arch is parallel to a plane where the first negative electrode part is located, and a shortest distance between the top surface of the convex arch and the plane where the first negative electrode part is located is in a range of 1 to 2 mm.

In an embodiment, the first positive electrode part defines an overflow hole extending through the first positive electrode part.

In an embodiment, a series-connected bus bar includes a positive electrode module and a negative electrode module connected to each other. The negative electrode module is connected to a negative terminal of a cell at an output terminal of one of cylindrical power battery modules, the positive electrode module is connected to a positive terminal of the cell at an input terminal of another one of the cylindrical power battery modules. The positive electrode module and the negative electrode module are connected by a second thermal fuse.

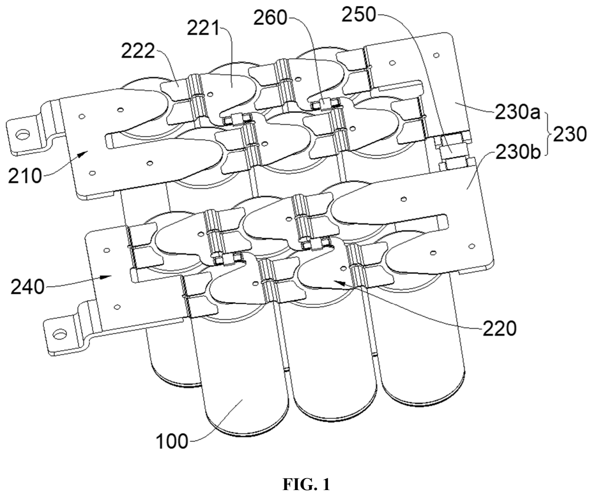

Referring to FIG. 1 to FIG. 6, a bus bar assembly is applied to multiple cylindrical power battery modules 10, each cylindrical power battery module 10 includes multiple cells 100, and the bus bar assembly includes a positive bus bar 210, a negative bus bar 240, a series-connected bus bar 230, and a connecting bus bar 220. The connecting bus bar 220 is disposed in a cylindrical power battery module 10, and the connecting bus bar 220 is arranged to connect two adjacent cells 100 in a first direction in series and to connect two adjacent cells 100 in a second direction in parallel. The series-connected bus bar 230 is arranged to connect two adjacent cylindrical power battery modules 10 in series to form a battery group. The positive bus bar 210 is connected to a positive terminal of a cell 100 at a positive output terminal of the battery group. The negative electrode bus bar 240 is connected to a negative terminal of a cell 100 at a negative output terminal of the battery group. All of parts of the connecting bus bar 220, the series-connected bus bar 230, and the negative bus bar 240 respectively connected to negative terminals of corresponding cells 100 are defined as negative electrode parts. At least one partition slot 270 is defined on a negative electrode part, and the at least one partition slot 270 is defined to separate the negative electrode part into at least two separated parts in the second direction. Each of the at least two separated parts is connected to a negative terminal of a corresponding cell 100.

In this embodiment, preferably, one partition slot 270 is defined on the negative electrode part, and the partition slot 270 extends in the first direction and equally separates the negative electrode part into two identical separated parts in the second direction. Each of the two identical separated parts is connected to a negative terminal of a corresponding cell 100 while in service. The structure of the negative electrode part that is separated into two separated parts can improve deformation ability of the negative electrode part. Compared with the structure where the negative electrode part is welded as a whole to the negative terminal of the cell 100, such structure can effectively reduce welding stress. When the cell 100 expands or vibrates, a separated part deforms to absorb a peel force and a shear force imposed on a connection between the negative terminal of the cell 100 and the negative electrode part, thereby effectively reducing a risk of structural failure of the connection between the negative electrode part and the negative terminal of the cell 100, and enhancing the lifespan and safety performance of the cylindrical power battery module 10 or the battery pack.

By equally separating the negative electrode part into two identical separated parts, the two identical separated parts can have the same current carrying area, enabling each of the two identical separated parts to possess similar deformation capabilities, i.e., enabling different regions of the negative electrode part to absorb the peel force and the shear force uniformly. Meanwhile, the structure of the partition slot 270 extending in the first direction facilitates processing of the partition slot 270.

In another embodiment, an extending direction of the partition slot 270 is parallel to the first direction. The quantity of partition slot 270 may be two, three, etc.; correspondingly, two partition slots 270 may separate the negative electrode part into three separated parts in the second direction; three partition slots 270 may separate the negative electrode part into four separated parts in the second direction. It may be noted that the quantity of partition slot 270 can be determined according to actual needs and is not limited in this regard.

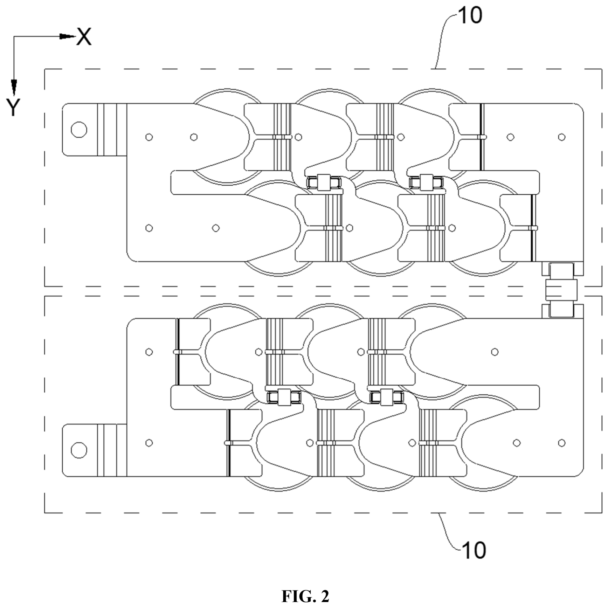

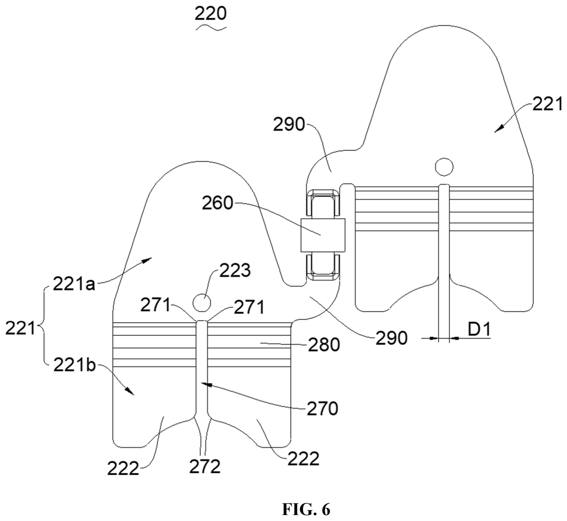

In other embodiments, optionally, an angle between the extending direction of the partition slot 270 and the first direction is within a range of ± 45°. A status when the angle between the extending direction of the partition slot 270 and the first direction is 0° is a preferred embodiment as illustrated in FIG. 2 and FIG. 6, which will not be elaborated herein. In the embodiment, two adjacent partition slots 270 may be defined in parallel or may not be defined in parallel, as long as the negative electrode part can be separated into multiple separated parts. It may be noted that when extending directions of two adjacent partition slots 270 are not in parallel, a shape of each of the separated parts may be different.

In this embodiment, optionally, a width of each of the at least one partition slot 270 is in a range of 0.5 mm to 5 mm; furthermore, the width of each of the at least one partition slot 270 is in a range of 1 mm to 3 mm.

As illustrated in FIG. 6, preferably, the width of the partition slot 270 is referred to as D1, and D1=2mm herein. In other embodiments, the value of D1 can be 2.2mm, 2.4mm, or 2.6mm. In this regard, the partition slot 270 can not only reduce the aforementioned welding stress of the negative electrode part, and absorb the peel force and the shear force imposed on the connection between the negative terminal of the cell 100 and the negative electrode part, but also meet the requirements for a current carrying capacity and a temperature rise of the bus bar assembly.

In this embodiment, a fillet is defined at a top corner of each of the at least one partition slot 270.

Specifically, a first fillet 271 with a radius of 0.5mm is defined at an inner top corner of the partition slot 270. The first fillet 271 is defined to decrease a stress concentration at the inner top corner of the partition slot 270, so as to prevent the partition slot 270 from tearing at the inner top corner during the deformation process of the separated parts. A second fillet 272 with a radius of 2mm is defined at an outer top corner of the partition slot 270, so as to prevent the separated parts from scratching the negative terminal of the cell 100 during an assembly process of the separated parts.

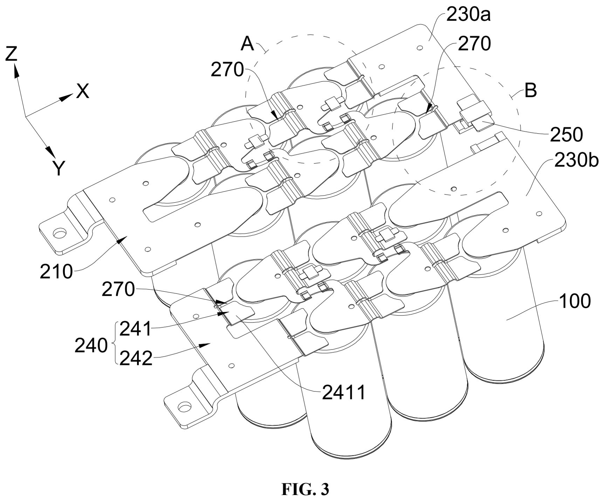

In this embodiment, exemplarily, as illustrated in FIG. 2, two cylindrical power battery modules 10 are connected in series by the series-connected bus bar 230 to form a battery group. Specifically, the first direction is referred to as a X direction as illustrated in FIG. 2 and FIG. 3, and the second direction is referred to as a Y direction as illustrated in FIG. 2 and FIG. 3. For the convenience of description, a column of cells 100 arranged in the first direction in the same cylindrical power battery module 10 is defined as a battery column. In this regard, the cylindrical power battery module 10 provided in this embodiment includes two battery columns arranged in the second direction. A part of the connecting bus bar 220 connected to the negative terminal of the cell 100 is defined as a first negative electrode part 221b, and a part of the connecting bus bar 220 connected to the positive terminal of the cell 100 is defined as a first positive electrode part 221a. A part of the series-connected bus bar 230 connected to the negative terminal of the cell 100 is defined as a second negative electrode part 231, and a part of the series-connected bus bar 230 connected to the positive terminal of the cell 100 is defined as a second positive electrode part. A part of the negative bus bar 240 connected to the negative terminal of the cell 100 is defined as a third negative electrode part 241. In this embodiment, at least one partition slot 270 separates the first negative electrode part 221b into at least two first separated parts 222; at least one partition slot 270 separates the second negative electrode part 231 into at least two second separated parts 2311; and at least one partition slot 270 separates the third negative electrode part 241 into at least two third separated parts 2411.

Specifically, the connecting bus bar 220 includes at least two separate sheets 221 arranged in the second direction, and two adjacent separate sheets 221 are connected by a first thermal fuse 260. In this embodiment, the connecting bus bar 220 includes two separate sheets 221 arranged in the second direction, respectively corresponding to the two battery columns arranged in the second direction in the cylindrical power battery module 10. The first thermal fuse 260 herein can fuse to disconnect the circuit immediately and accurately when an internal short circuit or an external short circuit happens to the cylindrical power battery module 10, thereby improving the safety performance of the cylindrical power battery module 10 or the battery pack.

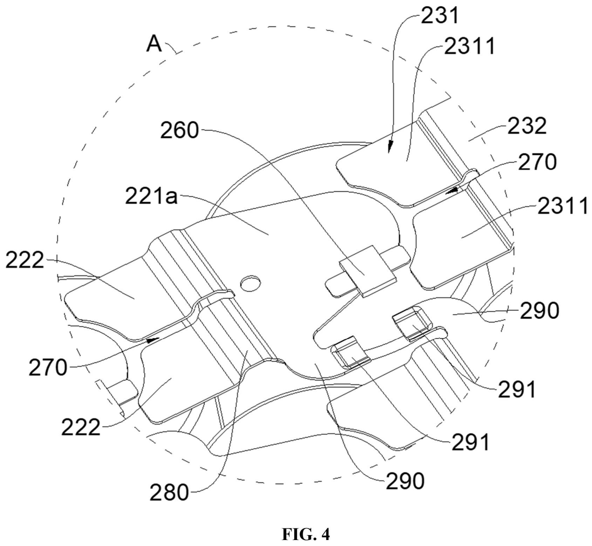

In this embodiment, as illustrated in FIG. 4 and FIG. 6, a part of a separate sheet 221 connected to a positive terminal of a corresponding cell 100 is the aforementioned first positive electrode part 221a, and a part of a separate sheet 221 connected to a negative terminal of a corresponding cell 100 is the aforementioned first negative electrode part 221b. A terminal of the first thermal fuse 260 is connected to the first positive electrode part 221a. Furthermore, each of two adjacent separate sheets 221 arranged in the second direction is provided with a first extension part 290 at their sides facing towards each other, and the first extension part 290 is disposed at the first positive electrode part 221a. The first extension part 290 defines a first groove 291, which is arranged to accommodate the first thermal fuse 260. On one hand, the first groove 291 facilitates the assembly and welding of the first thermal fuse 260 and the first extension part 290. On the other hand, the first thermal fuse 260 being embedded in the first groove 291 reduces the structural thickness of the first thermal fuse 260 in a longitudinal direction, i.e., a Z direction as illustrated in FIG. 3, so as to prevent components assembled on the upper side of the bus bar assembly, such as the liquid cooling plate, etc., from pressing and damaging the first thermal fuse 260.

In this embodiment, as illustrated in FIG. 4 and FIG. 6, the first negative electrode part 221b is provided with a convex arch 280, which protrudes in a direction away from the cell 100. The partition slot 270 defined on the connecting bus bar 220 extends to the convex arch 280. The first negative electrode part 221b, the first positive electrode part 221a, and the first extension part 290 are integrally formed. Specifically, the separate sheet 221 is formed by press forming. In an actual production process, there are errors in external dimensions of each of the cells 100. Therefore, after the cells 100 are assembled into the box (not illustrated in the figure), the negative terminals of each of the cells 100 have a certain height difference in the Z direction as illustrated in FIG 3. The convex arch 280 can provide a certain deformation margin for the first negative electrode part 221b or each of the first separated parts 222 in the Z direction. Cooperating with the partition slot 270, the convex arch 280 enables the deformation margin of each of the first separated parts 222 to be easier to be extended to compensate for the dimension errors of the cells 100 in the Z direction.

In this embodiment, a top surface of the convex arch 280 is parallel to a plane where the first negative electrode part 221b is located, and a shortest distance between the top surface of the convex arch 280 and the plane where the first negative electrode part 221b is located is in a range of 1 to 2 mm. Preferably, the shortest distance between the top surface of the convex arch 280 and the plane where the first negative electrode part 221b is located is 1mm. In other embodiments, the shortest distance between the top surface of the convex arch 280 and the plane where the first negative electrode part 221b is located may be 1.1mm, 1.2mm or 1.3mm. With such arrangement, on the one hand, a requirement for the deformation margin of the connection bar 220 in the Z direction is met, and on the other hand, oversize connection bar 220 in the Z direction can be prevented.

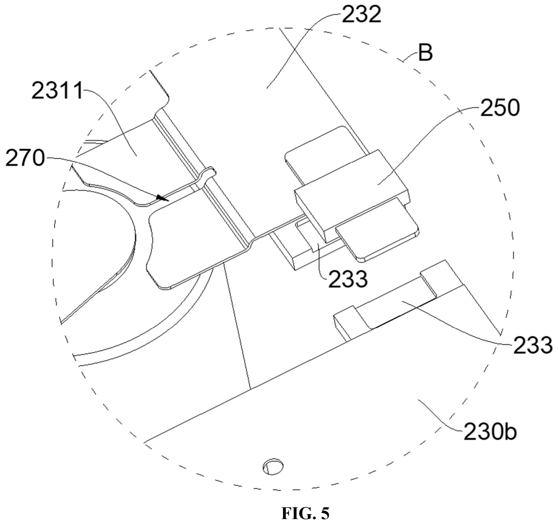

In this embodiment, as illustrated in FIG. 3 and FIG. 5, the series-connected bus bar 230 includes a positive module 230b and a negative electrode module 230a connected to each other. The negative module 230a is connected to a negative terminal of a cell 100 at an output terminal of one of cylindrical power battery modules 10, and the positive electrode module 230b is connected to a positive terminal of a cell 100 at an input terminal of another one of the cylindrical power battery modules 10. Specifically, the positive electrode module 230b and the negative electrode module 230a are connected by a second thermal fuse 250. The second thermal fuse 250 can fuse to disconnect the circuit when an internal short circuit or an external short circuit happens to the battery group, thereby ensuring the safety of the battery group or the battery pack.

Furthermore, the negative electrode module 230a includes a parallel-connected negative electrode main body 232, and the aforementioned second negative electrode part 231 is arranged on the parallel-connected negative electrode main body 232. A second groove 233 is defined on each of the negative electrode module 230a and the positive electrode module 230b, and is arranged to accommodate the second thermal fuse 250.

As illustrated in FIG. 3, the negative bus bar 240 includes a bus bar main body 242, on which the aforementioned third negative electrode part 241 is disposed. In this embodiment, the bus bar main body 242 extends in the second direction. The two third negative electrode parts 241 are disposed on one side of the bus bar main body 242 closed to the cells 100, and are respectively connected to the negative terminals of the two cells 100 at a negative output terminal of the battery group. The bus bar main body 242 serves as the negative output terminal of the battery group.

In this embodiment, the first positive electrode part 221a defines an overflow hole 223 extending through the first positive electrode part 221a. In embodiments of the present disclosure, the overflow hole 223 is in communication with the gap between the first positive electrode part 221a and the negative terminal of the cell 100 connected to the first positive electrode part 221a. In usage, when the foam adhesive is filled between the cells 100, the excessive foam adhesive expands in the Z direction and overflows through the overflow hole 223, so as to reduce the peel force exerted by the foam adhesive on the series-connected bus bar 230 to separate it from the cell 100, achieving high safety performance.

A battery module is also provided in this embodiment. Specifically, a cylindrical power battery module 10 illustrated in FIG. 2 is provided, which includes the aforementioned bus bar assembly. The battery module has high safety performance.

A battery pack is also provided in this embodiment. The battery pack includes the aforementioned battery module, or a battery group formed by connecting the aforementioned battery modules by the series-connected bus bar 230. The battery pack has high safety performance and a long service life.

## Claims

1. A bus bar assembly, applied to cylindrical power battery modules (10), each cylindrical power battery module (10) comprises a plurality of cells (100), the bus bar assembly comprises a positive bus bar (210), a negative bus bar (240), a series-connected bus bar (230), and a connecting bus bar (220); wherein
the connecting bus bar (220) is disposed in a cylindrical power battery module (10), and the connecting bus bar (220) is arranged to connect two adjacent cells (100) in a first direction in series and to connect two adjacent cells (100) in a second direction in parallel;
the series-connected bus bar (230) is arranged to connect two adjacent cylindrical power battery modules (10) in series to form a battery group;
the positive bus bar (210) is connected to a positive terminal of a cell (100) at a positive output terminal of the battery group;
the negative electrode bus bar (240) is connected to a negative terminal of a cell (100) at a negative output terminal of the battery group; and
all of parts of the connecting bus bar (220), the series-connected bus bar (230), and the negative bus bar (240) respectively connected to negative terminals of corresponding cells (100) are defined as negative electrode parts, at least one partition slot (270) is defined on a negative electrode part, and the at least one partition slot (270) is defined to separate the negative electrode part into at least two separated parts in the second direction, and each of the at least two separated parts is connected to a negative terminal of a corresponding cell (100).

2. The bus bar assembly according to claim 1, wherein an angle between an extending direction of each of the at least one partition slot (270) and the first direction is within a range of ±45°.

3. The bus bar assembly according to claim 1, wherein a fillet is defined at a top corner of each of the at least one partition slot (270).

4. The bus bar assembly according to any one of claims 1 to 3, wherein a width of each of the at least one partition slot (270) is in a range of 0.5 mm to 5 mm.

5. The bus bar assembly according to claim 4, wherein the width of each of the at least one partition slot (270) is in a range of 1 mm to 3 mm.

6. The bus bar assembly according to any one of claims 1 to 3, wherein the connecting bus bar (220) comprises at least two separate sheets (221) arranged in the second direction, and two adjacent separate sheets (221) are connected by a first thermal fuse (260).

7. The bus bar assembly according to claim 6, wherein a part of a separate sheet (221) connected to a positive terminal of a corresponding cell (100) is defined as a first positive electrode part (221a), a part of the separate sheet (221) connected to a negative terminal of the corresponding cell (100) is defined as a first negative electrode part (221b), and a terminal of the first thermal fuse (260) is connected to the first positive electrode part (221a).

8. The bus bar assembly according to claim 7, wherein each of two adjacent separate sheets (221) arranged in the second direction is provided with a first extension part (290) at their sides facing towards each other, and the first extension part (290) is disposed at the first positive electrode part (221a); and
the first extension part (290) defines a first groove (291), and the first groove (291) is arranged to accommodate the first thermal fuse (260).

9. The bus bar assembly according to claim 7, wherein the first negative electrode part (221b) is provided with a convex arch (280), and the convex arch (280) protrudes in a direction away from the cell (100); and
the at least one partition slot (270) defined on the connecting bus bar (220) extends to the convex arch (280).

10. The bus bar assembly according to claim 9, wherein a top surface of the convex arch (280) is parallel to a plane where the first negative electrode part (221b) is located, and a shortest distance between the top surface of the convex arch (280) and the plane where the first negative electrode part (221b) is located is in a range of 1 to 2 mm.

11. The bus bar assembly according to claim 7, wherein the first positive electrode part (221a) defines an overflow hole (223) extending through the first positive electrode part (221a).

12. The bus bar assembly according to claim 1, wherein the series-connected bus bar (230) comprises a positive electrode module (230b) and a negative electrode module (230a) connected to each other, wherein
the negative electrode module (230a) is connected to a negative terminal of a cell (100) at an output terminal of one of the cylindrical power battery modules (10), the positive electrode module (230b) is connected to a positive terminal of a cell (100) at an input terminal of another one of the cylindrical power battery modules (10); and
the positive electrode module (230b) and the negative electrode module (230a) are connected by a second thermal fuse (250).

13. A battery module, comprising the bus bar assembly according to any one of claims 1 to 12.

14. A battery pack, comprising the battery module according to claim 13.
